(19) Europäisches Patentamt
European Patent Office
Office européen des brevets

(11) EP 1 531 615 A2

(12) **EUROPEAN PATENT APPLICATION**

(43) Date of publication:
**18.05.2005 Bulletin 2005/20**

(51) Int Cl.7: **H04N 1/56**

(21) Application number: **04256903.8**

(22) Date of filing: **08.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **11.11.2003 JP 2003381558**

(71) Applicant: **Fuji Photo Film Co., Ltd.**
**Kanagawa-ken (JP)**

(72) Inventors:
- **Watanabe, Kazuo, c/O Fuji Photo Film Co., Ltd.**
  **Minato-ku, Tokio (JP)**
- **Tachibana, Hajime, c/o Fuji Photo Film Co., Ltd.**
  **Minato-ku, Tokyo (JP)**
- **Shidara, Shinichi, c/o Fuji Photo Film Co., Ltd.**
  **Minato-ku, Tokyo (JP)**
- **Fujino, Tsutomu, c/o Fuji Photo Film Co., Ltd.**
  **Minato-ku, Tokyo (JP)**
- **Yatabe, Kazunari,**
  **Fuji Systems Machines Co., Ltd.**
  **Zama-shi, Kanagawa (JP)**
- **Kushida, Takashi,**
  **Fuji Systems Machines Co., Ltd.**
  **Zama-shi, Kanagawa (JP)**

(74) Representative: **Stevens, Jason Paul**
**Frank B. Dehn & Co.**
**179 Queen Victoria Street**
**London EC4V 4EL (GB)**

(54) **Document processor**

(57) A document processor (2) comprises an image reader (14) for reading a document sheet (10) to output digital RGB signals, a color model converter (42) that converts the RGB signals to HSV signals and YUV signals through arithmetic operations, and then attaches the YUV signals to the HSV signals of individual pixels, a color detector (43) for detecting pixels of those colors to be subjected to image processing; and an image processing section consisting of a color converter (45), a color extractor (46) and an area recognizer (47). The image processing section is previously registered with a number of colors to be subjected to image processing, wherein different contents of image processing are designated to respective colors, so the color converter (45), the color extractor (46) and the area recognizer (47) can carry out designated contents of image processing simultaneously on pixels of registered colors.

FIG.3

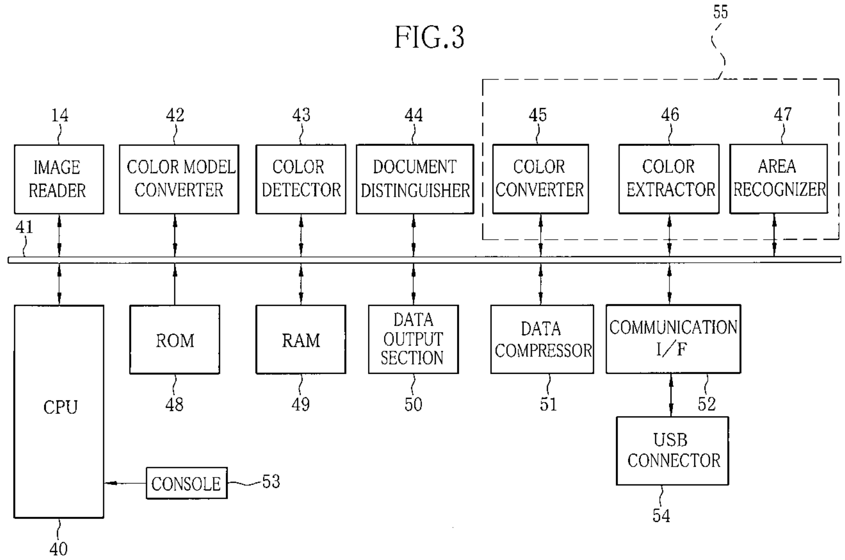


EP 1 531 615 A2

## Description

FIELD OF THE INVENTION

The present invention relates to a document processor that reads document sheets and the like as color image data, and process the image data in different ways.

BACKGROUND ARTS

Document processors have been suggested for example in Japanese Laid-open Patent Applications Nos. 2002-197413 and 2003-76939, which read many kinds of document sheets, e.g. delivery slips and applications for insurance, by use of an imaging device, such as a CCD line sensor, and carry out image dropout processing whereby unnecessary objects, like ruled lines, are converted into white or the same color as a base color of the sheet, to output a binary black-and-white image.

Because the document processors disclosed in the above mentioned prior arts can designate only one color to be dropped out of the image, they do not work for such cases where the document sheets contain many colors. In order to deal with different kinds of document sheets in the prior arts, setup values for image-processing must be changed for each individual kind of document sheets. Moreover, because the prior arts can only produce image data of one kind, i.e. a binary image, from the read document sheet, it is difficult to classify and keep the data on file. Therefore, the prior arts are not practical in term of data management.

SUMMARY OF THE INVENTION

In view of the foregoing, a primary object of the present invention is to provide a document processor that can carry out a wide variety of image processing at high speed.

According to the present invention, a document processor comprises an image reader for reading a document sheet to output image signals; and an image processing section previously registered with a number of colors to be subjected to image processing, wherein different contents of image processing are designated to the respective colors, so that the image processing section detect pixels of those colors to be subjected to the image processing, and carries out the different contents of image processing simultaneously on the detected pixels.

According to a preferred embodiment of the invention, the image signals are RGB signals, and the document processor further comprises a color model converter for converting the RGB signals to HSV signals and YUV signals through arithmetic operations, and attaching the YUV signals to the HSV signals of individual pixels, wherein the image processing section refers to the YUV signals to detect those pixels to be subjected to the image processing.

It is preferable to provide the document processor of the invention with a document distinguisher for determining the kind of the document sheet on the basis of the image signals, and outputting a determination result to the image processing section, so the image processing section automatically decides the contents of image processing in accordance with the determined kind of document sheet.

The document processor preferably comprises a data output section that outputs unprocessed original image data of the document sheet on the basis of the YUV signals as attached to the HSV signals.

According to a further preferred embodiment, the image processing section carries out at least one of dropout processing, color enhancement, color extraction and area recognition on the image signals, wherein the dropout processing is to convert the registered colors to white or a base color of the document sheet, the color enhancement is to convert the registered colors to black or deeper colors, the color extraction is to drop out other colors than the registered colors, and the area recognition is to recognize those areas which are shown in the registered colors, and cut out or mask out the recognized areas.

In the area recognition, the image processing section preferably converts those HSV signals which represent colors of the recognized areas to HSV{0, 0, 0} that represent black.

It is also preferable to provide the document processor with a device for designating some sections of the document sheet to be included in or excluded from the subject of image processing in the image processing section.

Because a number of colors to be subjected to image processing, and different contents of image processing are designated to the respective colors, the image processing section of the document processor of the present invention can detect pixels of those colors to be subjected to the image processing, and carries out the different contents of image processing simultaneously on the detected pixels. Accordingly, the document processor of the present invention can carry out a wide variety of image processing at high speed.

BRIEF DESCRIPTION OF THE DRAWINGS

The above and other advantages of the present invention will become more apparent from the following description of the preferred embodiments when read in connection with the accompanying drawings, wherein like reference numerals designate corresponding parts throughout several views:

Figure 1 is a schematic diagram illustrating a document processor according to an embodiment of the present invention;

Figure 2 is a schematic view of an example of document sheet;

Figure 3 is a block diagram illustrating an electric structure of the document processor;

Figure 4 is an explanatory diagram illustrating a data structure produced in the document processor, wherein YUV signals are attached to HSV signals; and

Figures 5A and 5B show a flow chart illustrating a sequence of operation of the document processor.

## DETAILED DESCRIPTION OF THE PREFERRED EMBODIMENTS

A document processor 2 shown in Fig.1 is constituted of a feeder 11 that automatically feeds document sheets 10 one by one into the document processor 2, a bar code reader 12 for reading bar codes 33, see Fig.2, from the document sheet 10, an imprinter 13 for printing a serial number or the like on the document sheet 10, an image reader 14 for reading the document sheet 10, a turning section 15 for turning over the document sheet 10, a stacker 17 for ejecting and stacking up the document sheet 10 after being read, and a secondary stacker 16 for ejecting unreadable slips 10 or for ejecting and stacking up the document sheet 10 while sorting them. The document processor 2 conveys the document sheet 10 through a conveying path 18 as shown by phantom lines in Fig.1, by use of not-shown conveyer rollers. The document sheet 10 is conveyed with its obverse side up, as the image reader 14 reads the document sheet 10. Image data read out through the image reader 14 is processed in a manner as set forth later.

The image reader 14 consists of a color CCD line sensor 19 and a light source 20 for illuminating the obverse side of the document sheet 10 with white light. The image reader 14 allows designating the size of the document sheet 10 to read out, and carries out a compensation process for a slant of the document sheet 10, and a contrast-conversion process. It is possible to dispose a second image reader across the conveying path 18 from the image reader 14, for reading a back side of the document sheet 10 at the same time when the obverse side of the document sheet 10 is read by the image reader 14. The second image reader may have the same structure as the image reader 14. The color CCD line sensor 19 has 7500 pixels in this embodiment, so it can read the document sheets 10 at a resolution of 600 dpi, 400 dpi, 300 dpi, or 200 dpi, to output analog picture signals. The picture signals are amplified by a not-shown amplifier, and then converted through a not shown A/D converter into digital RGB signals.

The document sheet 10 has a base 30 that is shown as a dotted area in Fig.2, on which blank frames 31 for filling in the information, like user's name, telephone number and address, and ruled lines 32 for partitioning these blank frames 31 into individual groups are formed.

Also a bar code 33 is formed on the base 30, to represent information on the shop or the like that issues the document sheet 10. The present embodiment assumes that the document processor 2 can deal with eight kinds of document sheets, and distinguishes between different kinds of document sheets by the color of the base 30 or the color of the ruled lines 32.

The document processor 2 has an internal structure as shown in Fig.3, wherein a CPU 40 is connected through a bus 41 to respective parts, so as to control the overall operation of the document processor 2. Concretely, the bus 41 is connected to the image reader 14, a color model converter 42, a color detector 43, a document distinguisher 44, a color converter 45, a color extractor 46, an area recognizer 47, a ROM 48, a RAM 49, a data output section 50, a data compressor 51 and a communication interface 52.

The CPU 40 is also connected to a console 53. The console 53 consists of data input devices, such as a keyboard and a mouse. The console 53 is used for registering base colors of the document sheets to deal with, for registering colors to be subjected to image processing, for designating a content of image processing to each of the registered colors, for designating some sections of the document sheet 10 to be included in the subject of image processing, or excluded from the subject of image processing, as well as for designating an output format of processed image data. The CPU 40 controls the respective parts in response to command data input through the console 53.

It is to be noted that the color converter 45, the color extractor 46, and the area recognizer 47 constitute an image processing section 55. The colors registered through the console 53 are entered in a format according to HSV (hue, saturation, value) system. It is also possible to connect a host computer to the document processor 2 through the communication interface 52, so that the above data may be entered through a keyboard or a mouse of the host computer.

The color model converter 42 converts the RGB signals from the image reader 14 into HSV signals and YUV signals through operations. Then the color model converter 42 attaches the YUV signals to the respective HSV signals of the individual pixels of the CCD line sensor 19. The HSV signals and the YUV signals are obtained from the RGB signals through the following operations:

$$V = \max(R,G,B);$$

$$\Delta = \max(R,G,B) - \min(R,G,B);$$

and

$$S = \Delta/\max(R,G,B),$$

wherein max(R,G,B) and min(R,G,B) respectively represent a maximum value and a minimum value among the RGB signals, and wherein S = 0 and H = -1 (undefined) when max(R,G,B) = 0, and H = 60{(G-B)/Δ} when max(R,G,B) = R, and H = 60{2+(B-R)/Δ} when max(R,G,B) = G, and H = 60{4+(R-G)/Δ} when max(R, G,B) = B. If H < 0, 360 is added.

$$Y = 0.299R + 0.587G + 0.114B;$$

$$U = -0.169R - 0.331G + 0.500;$$

and

$$V = 0.500R - 0.419G - 0.081B.$$

Fig.4 shows the structure of the data obtained by the color model conversion, wherein 8 bits are assigned to each value (Y, U, V) of the YUV signal, 10 bits to the H-value of the HSV signal, and 7 bits to each of the S- and V-values of the HSV signal. In total, each data unit consists of 5 bytes. The values (U, V) of the YUV signal are separately allocated to two adjacent pixels. To avoid confusion, "Va" represents the V-value of the HSV signal, whereas "Vb" represents the V-value of the YUV signal.

The color detector 43 detects pixels of those colors which are to be processed, and sends the detection results to the document distinguisher 44, the color converter 45 and the color extractor 46 and the area recognizer 47. The respective sections 44 to 47 carry out different types of image processing on the basis of the color detection results from the color detector 43, as set forth below. It is alternatively possible to provide the respective sections 44 to 47 with individual color detectors.

The document distinguisher 44 determines the kind of the document sheet 10 with reference to the YUV signals produced from the color model converter 42, and notifies the determination result to the CPU 40. The document distinguisher 44 has a number of counters. Each counter counts the number of those pixels which are included in a color range of one of previously registered base colors. As set forth above, the base colors of the different kinds of document sheets are previously registered through the console 53. Accordingly, the counters represent the respective base colors. Among of these counters, the one counting up to the highest value represents the base color of the exiting document sheet 10, so that the kind of the existing document sheet 10 is determined by the base color. The counter may count the number of pixels in the whole area of the document sheet 10, or within a section of the document sheet 10, which is also designated through the console 53.

The color converter 45 performs a dropout process to convert designated colors into white or the same color of the base 30, or a color enhancement process to convert designated colors into black or make them deeper. The dropout process and the color enhancement process are performed in a section designated through the console 53. The color extractor 46 performs a process to drop other colors than a designated color out of a section that is designated through the console 53. The area recognizer 47 recognizes an area which is shown in a registered color within a section designated through the console 53, and cuts out or masks these areas. In the present description, the area determined by the area recognizer 47 includes a fragment bordered with the registered color or a fragment colored in the registered color.

The color converter 45, the color extractor 46 and the area recognizer 47 do not apply the image processing to those sections of the document sheet 10 which are designated to be excluded from the subject of the image processing. The designation is made through the console 53. The section to be excluded from the subject of the image processing may for example be a section having the title of the document sheet 10.

The color converter 45 and the color extractor 46 carry out the designated image processing while checking each individual pixel as to if it is the subject of the image processing, with reference to the YUV signal that is attached to the HSV signal of each pixel in the color model converter 42. For example, when green lines 32 are to be converted to blue, and blue lines 32 are to be dropped out into white, the conversion to blue is applied to the HSV signals of those pixels which are included in the color range of the green lines 32. Then, those pixels being included in the color range of the blue lines 32 are detected with reference to the YUV signal, so that the HSV signals of these pixels are dropped out into white. This method prevents double conversion that the blue portions obtained by the blue-conversion of the green lines 32 are unexpectedly dropped out into white through the following dropout process of the blue lines 32.

The area recognizer 47 converts those HSV signals which represent the color of the recognized area, to black, i.e. HSV (0, 0, 0). Thereafter, the area recognizer 47 judges continuity of pixels of the determined area, to carry out a tracing process to detect the area size: vertical and horizontal lengths of the area, and width of enclosing lines. The area size detected through the tracing process is fine-adjusted in the unit of one pixel, and thereafter, the area is cut out or subjected to a masking process whereby the area is blacked out or painted out.

To cut out a particular area that contains user's name, address and telephone number, the particular area is previously enclosed with a color marker or the like, and the color of the marker is previously registered as the subject of the image processing. To mask out such an area that contains private information like a password and user's annual income, the area is previously painted out with a previously registered fluorescent color. Alternatively, it is possible to register the color of lines that enclose those areas which will contain private information.

The CPU 40 controls the operation of the color converter 45, the color extractor 46 and the area recognizer 47 in accordance with the kind of the document sheet 10 that is determined by the document distinguisher 44, so as automatically to carry out the image processing designated for each kind of the document sheet 10 through the console 53.

The ROM 48 stores programs and data necessary for the operation of the document processor 2. The RAM 49 stores the result of distinction by the document distinguisher 44, the colors and contents of image processing that are registered for the individual kinds of document sheets, the base colors that are used for distinguishing between the different kinds of document sheets, data of color images, gray-scale images and binary images that are output from the data output section 50, and compressed data of these images.

The data output section 50 outputs processed image data after converting them into a designated output format, that is, as a color image, as a gray-scale image or as binary image data, wherein the data output section 50 can output data of different formats simultaneously. The output format is designated through the console 53 in accordance with the content of the image processing. Simultaneously with the processed image data, the data output section 50 also outputs the original image data, i.e. the image data before being processed, on the basis of the YUV signals attached to the HSV signals, after converting them into a designated output format. For example, the data output section 50 output binary image data of a cutout area, which is cutout by the area recognizer 47, simultaneously with original color image data of the whole document sheet 10. Thus, the data output section 50 can simultaneously output data of different formats. In a case where a number of areas are cut out by the area recognizer 47, data of each cutout area are output separately from each other.

In the present embodiment, the data compressor 51 compresses the data of color images and grayscale images into JPEG format data. On the other hand, the binary image data are compressed according to TIFF-G4 format. The data compressed in the data compressor 51 is stored in the RAM 49. The data stored in the RAM 49 may be sent to external apparatuses through the communication interface 52 and an USB connector 54.

Now the operation of the document processor 2 will be described with reference to the flowchart shown in Figs. 5A and 5B.

First the operator operates the console 53 to designate and register necessary items, and enters a start command. Then the document sheets 10 are sequentially fed from the feeder 11 into the document processor 2. The bar code reader 12 reads the bar code 33 on the document sheet 10, and the imprinter 13 prints a serial number or the like on the document sheet 10. Thereafter the CCD line sensor 19 of the image reader 14 reads the document sheet 10. The picture signals from the CCD line sensor 19 are amplified by the not-shown amplifier, and then converted through the not shown A/D converter into digital RGB signals.

The RGB signals from the image reader 14 is converted through the color model converter 42 into HSV signals and YUV signals. Then YUV signals are attached to the respective HSV signals of the individual pixels of the CCD line sensor 19.

After the color model conversion, the color detector 43 detects pixels of those colors which are to be processed, and sends the detection results to the document distinguisher 44, the color converter 45 and the color extractor 46 and the area recognizer 47. In the respective sections 44 to 47, different types of image processing are carried out on the basis of the color detection results from the color detector 43.

In the document distinguisher 44, the kind of the document sheet 10 is determined with reference to the YUV signals produced from the color model converter 42, and the determination result is notified to the CPU 40. In accordance with the kind of the document sheet 10 that is determined by the document distinguisher 44, the CPU 40 controls the operation of the color converter 45, the color extractor 46 and the area recognizer 47 so as automatically to carry out the image processing designated for each kind of the document sheet 10.

If the content of image processing is color conversion, the color converter 45 is activated to perform the dropout process to convert registered colors into white or the same color of the base 30, or the color enhancement process to convert other registered colors into black or make them deeper, within a section designated through the console 53. If the content of image processing is color extraction, the color extractor 46 is activated to drop other colors out of a designated section than a registered color.

At that time, the color converter 45 and the color extractor 46 simultaneously carry out the designated contents of image processing while checking each individual pixel as to if it is the subject of the image processing, with reference to the YUV signal that is attached to the HSV signal of each pixel in the color model converter 42.

If the content of image processing is area tracing, the area recognizer 47 is activated to recognize the area that is shown in the registered color in the designated section, and convert those HSV signals which represent the color of the recognized area to HSV (0, 0, 0) that represent black.

After the data conversion, the continuity of pixels is detected in this area, to make the tracing process for determining the area size, including the vertical and horizontal length of the area and the line width of the enclosing line. After the area size detected through the tracing process is fine-adjusted in the unit of one pixel, the area is cut out or subjected to the masking process to black out or paint out the area.

As shown in Fig.5B, the processed image data are converted through the data output section 50 into such output formats that are designated in accordance with the content of the image processing through the console 53, namely, into color image data, gray-scale image data or binary image data, and are simultaneously output from the data output section 50. Also the original image data, i.e. the image data before being processed, are converted into a designated output format on the basis of the YUV signals attached to the HSV signals, and are output simultaneously with the processed image data. After being output from the data output section 50, the color image data and the gray-scale image data are compressed through the data compressor 51 according to the JPEG format. The binary image data are compressed according to TIFF-G4 format. The compressed data are stored in the RAM 49.

The document sheet 10 read by the CCD image sensor 19 is inverted through the turning section 15 to orient the back side up when it is stacked on the stacker 17. If the kind of the document sheet 10 is not determined by the document distinguisher 44 or the document sheet 10 is judged to be unreadable, the document sheet 10 is ejected to the secondary stacker 16. In this way, the document sheet 10 is ejected to and stacked on either the stacker 17 or the secondary stacker 16 depending upon the judgment by the document distinguisher 44.

As described so far, the color conversion and the color extraction are carried out while checking each individual pixel with reference to the YUV signals as to if the pixel is the subject of image processing. Therefore, the lodger processor of the present invention can make batch processing, whereby a plural number of colors are simultaneously processed in different ways without the danger of unexpected double conversion. Accordingly, it is unnecessary to change the set up values when the lodger sheets 10 to deal with contain a number of colors, or when different kinds of lodger sheets are to be processed. Because those HSV signals which represent the color of the recognized area, are converted into HSV {0, 0, 0} that represent black, high-speed area recognition processing is achieved. Furthermore, because the lodger processor of the present invention can output data in different formats, it is easy to manage the output data.

It is possible to apply the above described color conversion or color extraction not only to a section designated through the console 53 but also to an area that is cut out by the area recognizer 47. In the above embodiment, one of the color conversion, color extraction and area recognition is carried out on one lodger sheet 10. But it is possible to carry out more than one of these processes on one lodger sheet 10.

Although the present invention has been described with respect to the preferred embodiments, the present invention is not to be limited by the embodiments but, on the contrary, various modifications will be possible without departing from the scope and spirit of the present invention as specified in appended claims.

**Claims**

**1.** A document processor comprising:

an image reader (14) for reading a document sheet (10) to output image signals; and
an image processing section (55) previously registered with a number of colors to be subjected to image processing, different contents of image processing being designated to the respective colors, said image processing section detecting pixels of those colors to be subjected to the image processing, and carrying out the different contents of image processing simultaneously on the detected pixels.

**2.** A document processor as claimed in claim 1, wherein said image signals are RGB signals, and said document processor further comprises a color model converter (42) for converting said RGB signals to HSV signals and YUV signals through arithmetic operations, and attaching said YUV signals to said HSV signals of individual pixels, wherein said image processing section refers to said YUV signals to detect those pixels to be subjected to the image processing.

**3.** A document processor as claimed in claim 1 or 2, further comprising a document distinguisher (44) for determining the kind of said document sheet on the basis of said image signals, and outputting a determination result to said image processing section, so said image processing section automatically decides the contents of image processing in accordance with the determined kind of document sheet.

**4.** A document processor as claimed in claim 2, further comprising a data output section (50) that outputs unprocessed original image data of said document sheet on the basis of said YUV signals as attached to said HSV signals.

**5.** A document processor as claimed in claim 2, wherein said image processing section carries out at least one of dropout processing, color enhancement, color extraction and area recognition on said image signals, wherein said dropout processing is to convert said registered colors to white or a base color of said document sheet, said color enhancement is to convert said registered colors to black or deeper colors, said color extraction is to drop out other colors than said registered colors, and said area recognition is to recognize those areas which are shown in said registered colors, and cut out or mask out said recognized areas.

**6.** A document processor as claimed in claim 5, Wherein said image processing section converts those HSV signals which represent colors of said recognized areas to HSV{0, 0, 0} in said area recognition.

**7.** A document processor as claimed in one of claims 1 to 6, further comprising a device (53) for designating some sections of said document sheet to be included in or excluded from the subject of image processing in said image processing section.

FIG.1

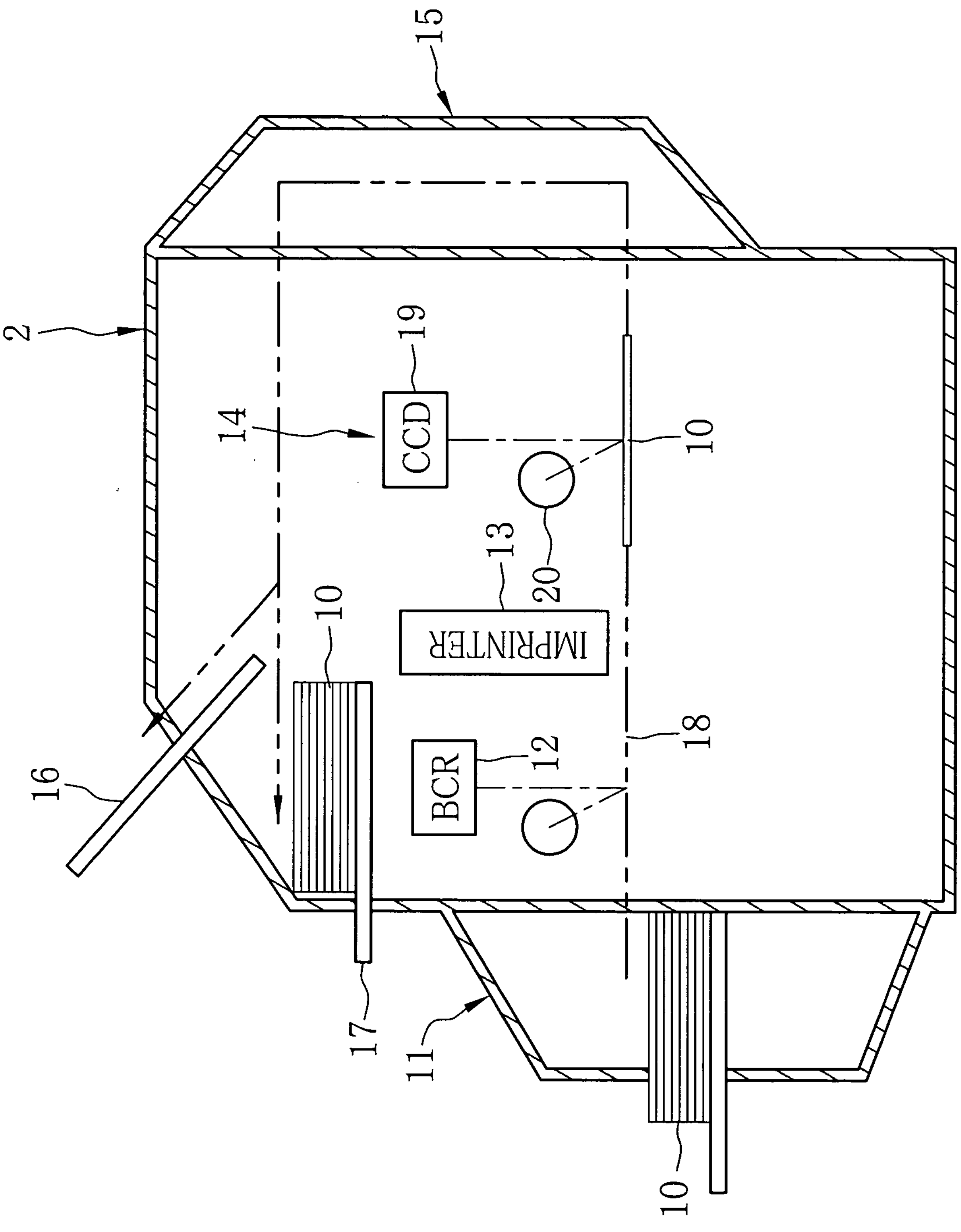

FIG.2

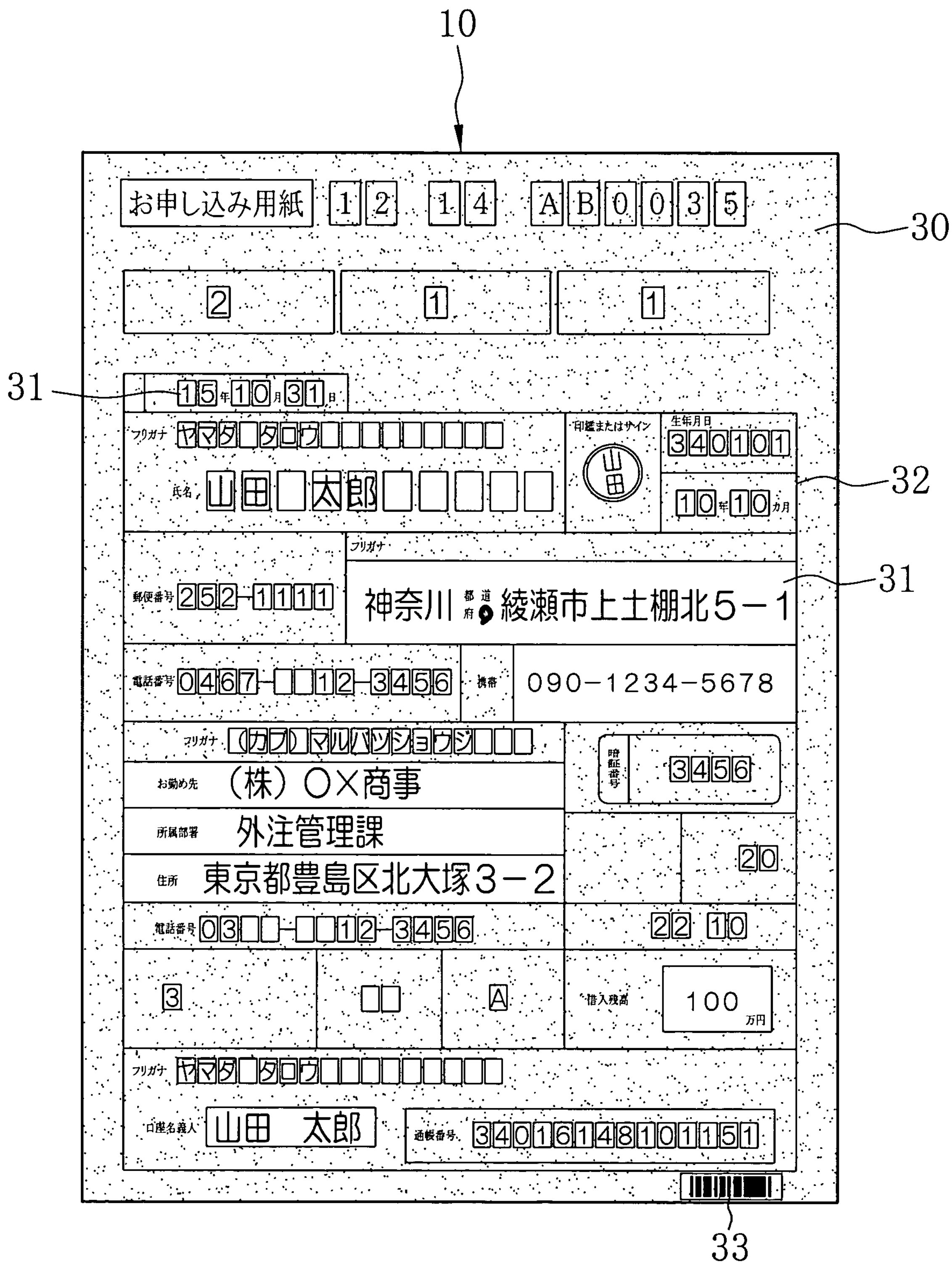
10
30
31
32
31
33
お申し込み用紙
12 14 AB0035
2
1
1
15年10月31日
フリガナ ヤマダ タロウ
氏名 山田 太郎
印鑑またはサイン
山田
生年月日
340101
10年10カ月
フリガナ
郵便番号 252-1111
神奈川 都道府県 綾瀬市上土棚北5－1
電話番号 0467-12-3456
携帯 090－1234－5678
フリガナ (カブ)マルバツショウジ
お勤め先 (株)〇×商事
所属部署 外注管理課
住所 東京都豊島区北大塚3－2
電話番号 03-12-3456
暗証番号
3456
20
22 10
3
A
借入残高 100 万円
フリガナ ヤマダ タロウ
口座名義人 山田 太郎
通帳番号 340161481011151

FIG.3

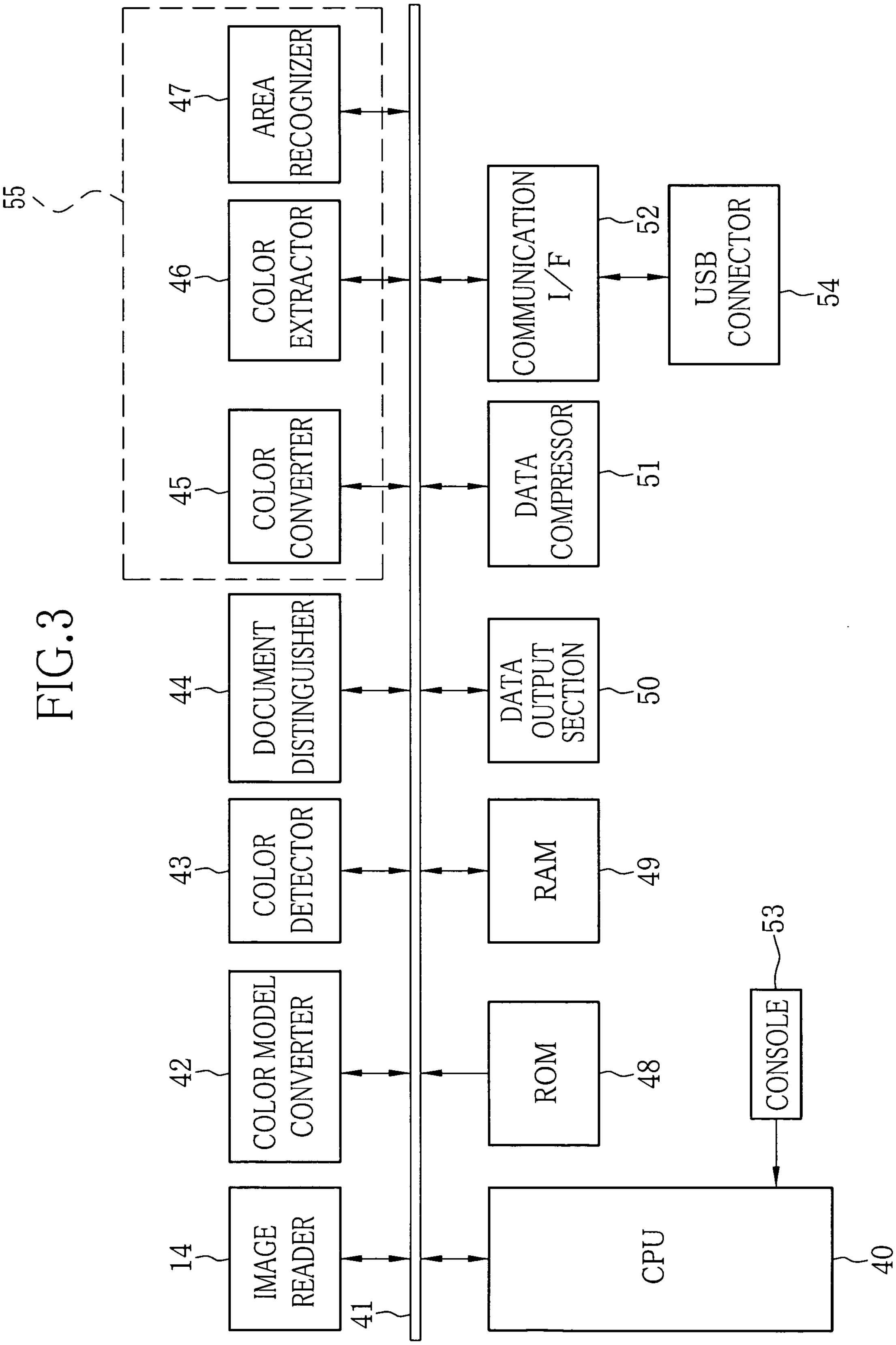
IMAGE READER
14
COLOR MODEL CONVERTER
42
COLOR DETECTOR
43
DOCUMENT DISTINGUISHER
44
COLOR CONVERTER
45
COLOR EXTRACTOR
46
AREA RECOGNIZER
47
55
41
CPU
40
ROM
48
RAM
49
DATA OUTPUT SECTION
50
DATA COMPRESSOR
51
COMMUNICATION I/F
52
USB CONNECTOR
54
CONSOLE
53

# FIG.4

| | byte \ bit | 7 | 6 | 5 | 4 | 3 | 2 | 1 | 0 |
|---|---|---|---|---|---|---|---|---|---|
| PIXEL 0 | 0 | $Y_0$ | | | | | | | |
| | 1 | $U_0$ | | | | | | | |
| | 2 | $H_0$ | | | | | | | |
| | 3 | $H_0$ | | $S_0$ | | | | | |
| | 4 | $S_0$ | $Va_0$ | | | | | | |
| PIXEL 1 | 5 | $Y_1$ | | | | | | | |
| | 6 | $Vb_0$ | | | | | | | |
| | 7 | $H_1$ | | | | | | | |
| | 8 | $H_1$ | | $S_1$ | | | | | |
| | 9 | $S_1$ | $Va_1$ | | | | | | |
| ⋮ | ⋮ | ⋮ | | | | | | | |
| PIXEL n | | $Y_n$ | | | | | | | |
| | | $U_n$ | | | | | | | |
| | | $H_n$ | | | | | | | |
| | | $H_n$ | | $S_n$ | | | | | |
| | | $S_n$ | $Va_n$ | | | | | | |
| PIXEL n+1 | | $Y_{n+1}$ | | | | | | | |
| | | $Vb_n$ | | | | | | | |
| | | $H_{n+1}$ | | | | | | | |
| | | $H_{n+1}$ | | $S_{n+1}$ | | | | | |
| | | $S_{n+1}$ | $Va_{n+1}$ | | | | | | |

FIG.5A

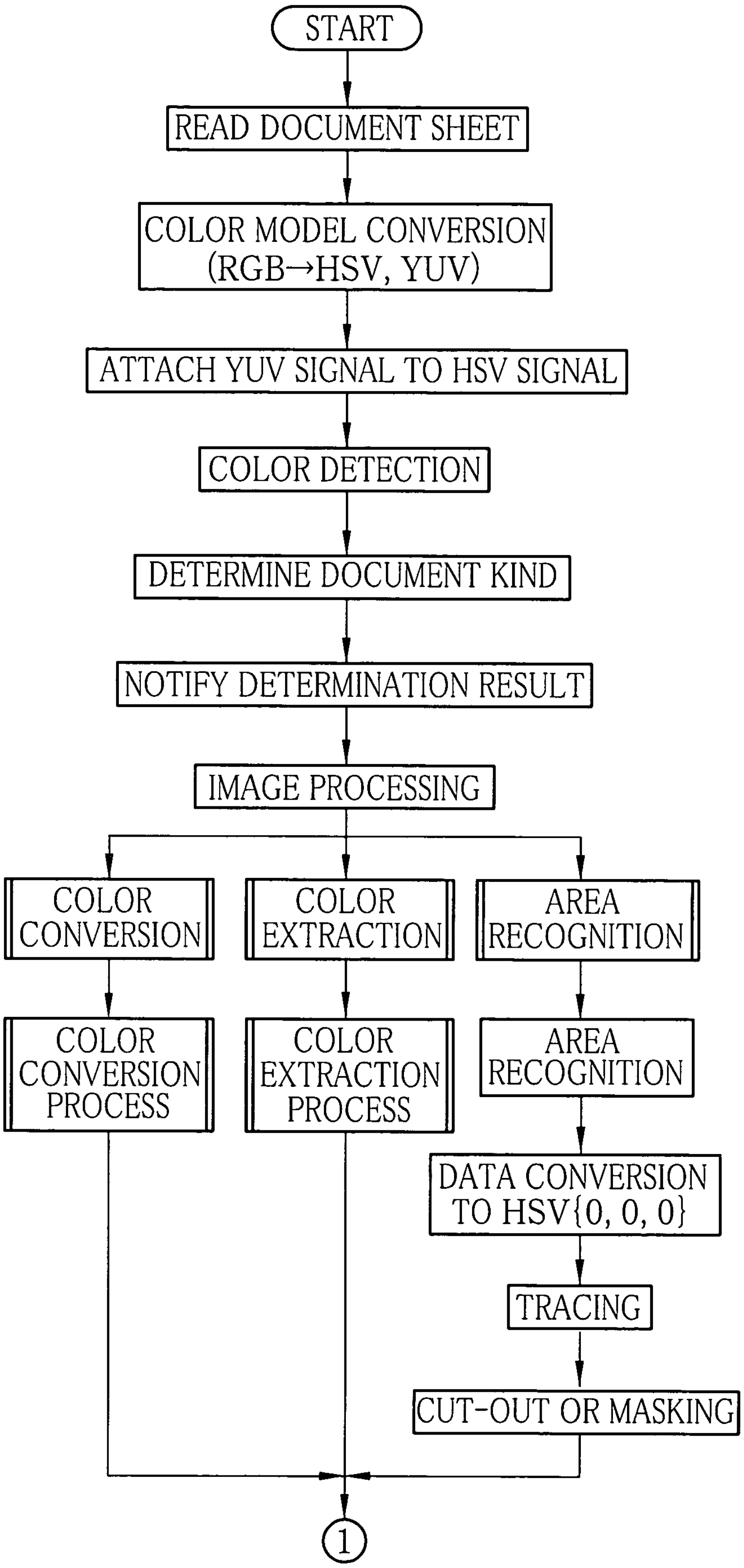
START
READ DOCUMENT SHEET
COLOR MODEL CONVERSION (RGB→HSV, YUV)
ATTACH YUV SIGNAL TO HSV SIGNAL
COLOR DETECTION
DETERMINE DOCUMENT KIND
NOTIFY DETERMINATION RESULT
IMAGE PROCESSING
COLOR CONVERSION
COLOR EXTRACTION
AREA RECOGNITION
COLOR CONVERSION PROCESS
COLOR EXTRACTION PROCESS
AREA RECOGNITION
DATA CONVERSION TO HSV{0, 0, 0}
TRACING
CUT-OUT OR MASKING
1

FIG.5B

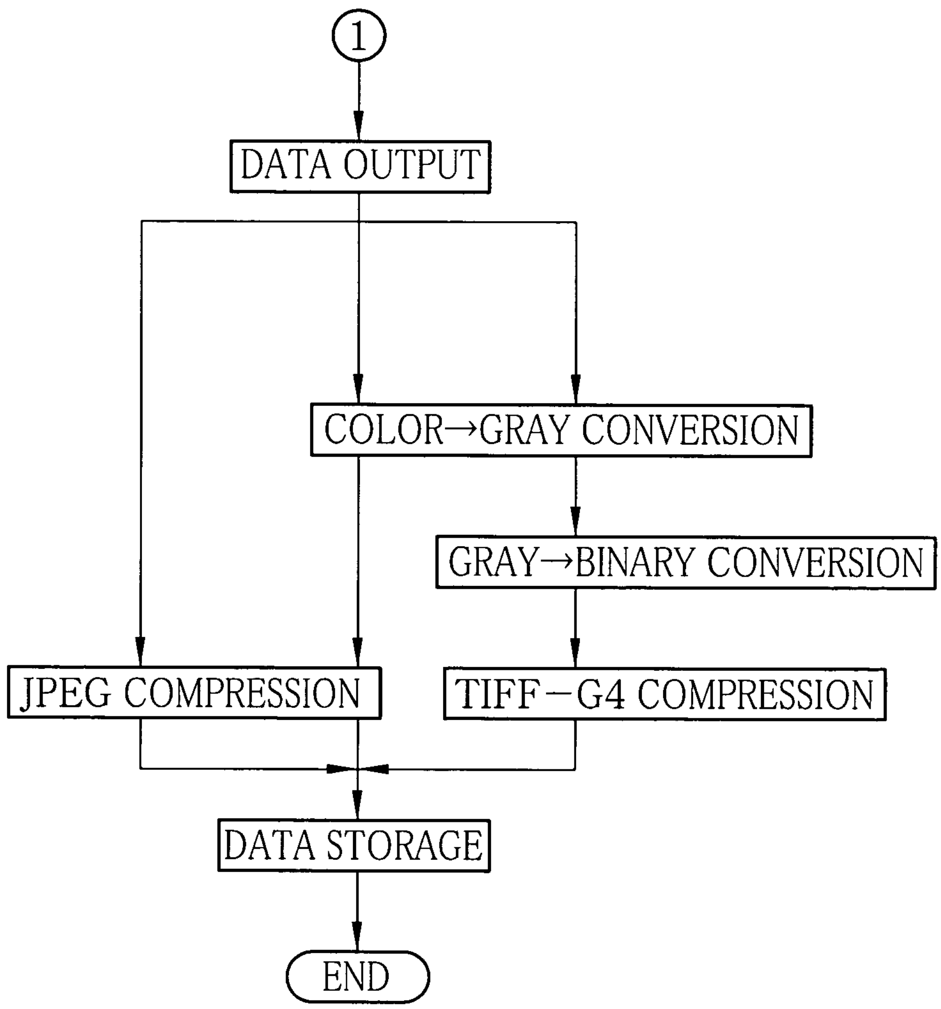
1
DATA OUTPUT
COLOR→GRAY CONVERSION
GRAY→BINARY CONVERSION
JPEG COMPRESSION
TIFF−G4 COMPRESSION
DATA STORAGE
END